## Europäisches Patentamt

## European Patent Office

## Office européen des brevets

(19)

(11) Veröffentlichungsnummer: **0 262 627**
**B1**

(12) # EUROPÄISCHE PATENTSCHRIFT

(45) Veröffentlichungstag der Patentschrift:
**11.04.90**

(21) Anmeldenummer: **87114084.4**

(22) Anmeldetag: **26.09.87**

(51) Int. Cl.⁴: **B29C 55/28, B29D 7/01**
**// B29L7:00**

(54) Vorrichtung zum Abstützen von Schlauchfolien aus thermoplastischem Kunststoff.

(30) Priorität: **01.10.86 DE 8626188 U**

(43) Veröffentlichungstag der Anmeldung:
**06.04.88 Patentblatt 88/14**

(45) Bekanntmachung des Hinweises auf die Patenterteilung:
**11.04.90 Patentblatt 90/15**

(84) Benannte Vertragsstaaten:
**AT BE CH DE ES FR GB IT LI NL SE**

(56) Entgegenhaltungen:
**DE-A- 2 447 694**
**DE-A- 3 117 806**
**GB-A- 1 504 469**

(73) Patentinhaber: **Reinhold, Klaus, Krönerstrasse 3,
D-4540 Lengerich I.W.(DE)**

(72) Erfinder: **Reinhold, Klaus, Krönerstrasse 3,
D-4540 Lengerich I.W.(DE)**

(74) Vertreter: **Busse & Busse Patentanwälte,
Postfach 1226 Grosshandelsring 6,
D-4500 Osnabrück(DE)**

ACTORUM AG

## Beschreibung

Die Erfindung betrifft eine Vorrichtung zum außenseitigen Abstützen von Schlauchfolien aus thermoplastischem Kunststoff, bestehend aus in Abziehrichtung der Schlauchfolie hintereinander angeordneten Gruppen von nach außen gekrümmten, auf verschiedene Schlauchfoliendurchmesser gleichzeitig und gleichsinnig einstellbaren Stützsegmenten, die für ihre Einstellbewegung jeweils mit einem schwenkbar in einem Trägerrahmen gelagerten, allen Stützsegmentgruppen gemeinsamen Drehstab und einem parallel zu diesem ausgerichteten, seinerseits allen Stützsegmentgruppen gemeinsamen Haltestab verbunden sind.

Derartige Abstützvorrichtungen, die aus der DE-A 2 447 694 bekannt sind, werden bei der Herstellung von Schlauchfolien aus thermoplastischen Kunststoffen in Schlauchfolien-Blasanlagen im Anschluß an den Extruder verwendet, um den aus dessen Ringdüse austretenden, anfangs weichplastischen Folienschlauch so lange zu führen und abzustützen, bis sich der Kunststoff ausreichend verfestigt und abgekühlt hat, so daß die Schlauchfolie, die üblicherweise mittels eines Walzenpaares abgezogen wird, flachgelegt und einem Folienwickler zugeführt werden kann. Die außenseitige Abstützung der Schlauchfolie durch in Abziehrichtung hintereinander angeordnete Gruppen von Stützsegmenten, die vorzugsweise ringförmig zur durch messergerechten Abstützung der Schlauchfolie zusammenwirken, besteht die Möglichkeit, daß von außen Kühlluft in direkte Berührung mit der zu kühlenden Schlauchfolienoberfläche gelangen kann, um so die Erstarrung des Kunststoffes und Verfestigung der Kunststoffolie günstig zu beeinflussen.

Dieser erwünschten Wirkungsweise stehen jedoch in der Praxis aufwendige Verstellmechanismen entgegen, die erforderlich sind, um die Stützsegmente sämtlicher Stützsegmentgruppen durch gleichzeitige und gleichsinnige Einstellbewegungen den unterschiedlichen Schlauchfoliendurchmessern anzupassen, die je nach den Produkterfordernissen in der Schlauchfolien-Blasanlage gefahren werden. So sind bei einer bekannten Abstützvorrichtung der eingangs angegebenen Art die Haltestäbe für die Stützsegmente jeweils etwa auf halbem Abstand zwischen den in Umfangsrichtung aufeinanderfolgenden Drehstäben angeordnet, indem jedes einzelne Stützsegment an seinem einen Ende mit dem zugehörigen Drehstab und an seinem anderen Ende mit dem zugehörigen Haltestab verbunden ist. Hiermit geht nicht nur ein hoher mechanischer Bauaufwand einher, sondern es wird auch der freie Zutritt der Kühlluft zur Außenseite der Schlauchfolie durch die von der durch die Anzahl der in jeder Stützsegmentgruppe verwendeten einzelnen Stützsegmente bestimmten Vielzahl der in Schlauchfolien-Abziehrichtung verlaufenden Dreh- und Haltestäbe unter Umständen erheblich beeinträchtigt.

Der Erfindung liegt die Aufgabe zugrunde, eine Schlauchfolien-Abstützvorrichtung der angegebenen Art zu schaffen, deren Bauaufwand unter Erhalt eines großen Verstellbereichs der Stützsegmente erheblich verringert ist und die dabei verbesserte Bedingungen für den Zutritt von Kühlluft zur Außenseite der Schlauchfolie schafft.

Diese Aufgabe wird nach der Erfindung ausgehend von einer Abstützvorrichtung der eingangs genannten Art in erster Linie dadurch gelöst, daß die Drehstäbe und die Haltestäbe jeweils zu einer Stabeinheit zusammengefaßt sind, bei der der Haltestab schwenkbar am Drehstab abgestützt ist und ein Ende eines Stützsegments in jeder Stützsegmentgruppe aufnimmt, dessen anderes Ende in einer wiederum allen Stützsegmentgruppen gemeinsamen Verbindungsstrebe einer benachbarten Stabeinheit abgestützt ist. Wesentliche weitere Ausgestaltungen der Erfindung ergeben sich aus den Unteransprüchen.

Durch die nach der Erfindung vorgesehene Zusammenfassung der Drehstäbe und der Haltestäbe jeweils zu einer Stabeinheit ist eine wesentliche Konstruktionsvereinfachung mit damit einhergehender Materialeinsparung erreicht, die zudem der Kühlluft einen verbesserten, im wesentlichen ungehinderten Zutritt zur Außenseite der Schlauchfolie in Ermangelung flächendeckender Bauteile zwischen den Stabeinheiten ermöglicht. Dies gilt im Zusammenhang damit, daß die Verbindungsstrebe zur Aufnahme des jeweils anderen Endes des Stützsegments ihrerseits jeweils den Stabeinheiten zugeordnet ist.

In ihren einfachsten Anwendungsfällen kann die erfindungsgemäße Abstützvorrichtung zwei in Abziehrichtung der Schlauchfolie mit Abstand hintereinander angeordnete Gruppen von Stützsegmenten aufweisen, wobei jedoch im Regelfall mehrere Stützsegmentgruppen, beispielsweise vier bis sechs Gruppen, zur Anwendung kommen. Desgleichen können in einfachen Anwendungsfällen, bei denen beispielsweise nur eine Stabilisierung der Schlauchfolienblase erreicht werden soll, nur zwei der nach außen gekrümmten Stützsegmente in mehr oder weniger diametraler Gegenüberlage auf einander gegenüberliegenden Schlauchfolienseiten vorgesehen sein. Im Normalfall werden jedoch mehr als zwei, beispielsweise drei oder vier, Stützsegmente in jeder Gruppe vorgesehen sein, die sodann in jeder Gruppe ringförmig unter Anpassung an den Umfang der Schlauchfolie zusammenwirken und dabei auf diese einen Kalibrierungseffekt ausüben.

Weitere Einzelheiten und Vorteile der Erfindung ergeben sich aus der nachfolgenden Beschreibung und der Zeichnung, in der ein Ausführungsbeispiel des Gegenstands der Erfindung schematisch veranschaulicht ist. Im einzelnen zeigen:

Fig. 1 eine teilweise geschnitte Seitenansicht einer Stabeinheit für die Stützsegmente einer erfindungsgemäßen Vorrichtung zum außenseitigen Abstützen von Schlauchfolien aus thermoplastischem Kunststoff, wobei der Ausleger und der Gelenkstab dieser Stabeinheit im auseinandergezogenen Zustand dargestellt sind,

Fig. 2 eine vergrößerte Darstellung einer Einzelheit II der Fig. 1 und

Fig. 3 einen Querschnitt durch die erfindungsgemäße Abstützvorrichtung entsprechend der Linie III-III der Fig. 1.

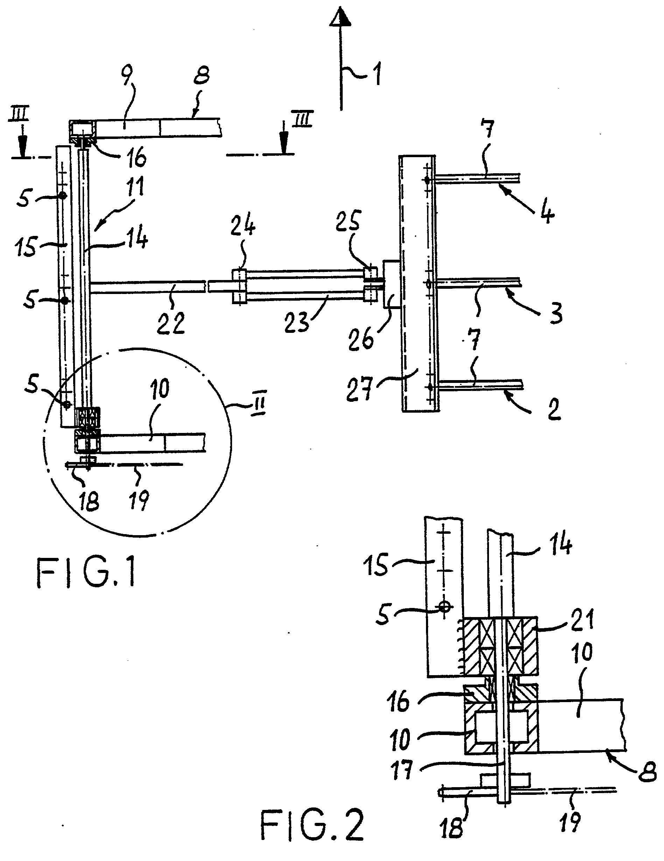

Die in der Zeichnung dargestellte Vorrichtung zum außenseiten Abstützen bzw. Kalibrieren von Schlauchfolien aus thermoplastischem Kunststoff findet im Anschluß an einen Extruder Anwendung, aus dessen Ringdüse die Schlauchfolie im weichplastischen Zustand austritt. Die Schlauchfolie wird beim ihrem Austreten aus der Ringdüse vorzugsweise innen und außen durch Kühlluft gekühlt, die aus einem äußeren und einem inneren Kühlring austritt. Die aus dem äußeren Kühlring austretende Kühlluft bestreicht dabei die Außenseite der Schlauchfolie, die üblicherweise von einem Walzenpaar in der in Fig. 1 durch einen Pfeil 1 kenntlich gemachten Richtung abgezogen und nach ausreichender Erstarrung und Verfestigung flachgelegt und aufgewickelt wird.

Die außenseitige Abstütz- und Kalibriervorrichtung besteht aus zwei oder mehreren, in Abziehrichtung 1 der Schlauchfolie mit Abstand hintereinander angeordneten Stützsegmentgruppen. Bei dem dargestellten Beispiel sind drei derartige Stützsegmentgruppen vorgesehen und mit 2,3 und 4 bezeichnet. Jede Stützsegmentgruppe 2,3 und 4 umfaßt zwei oder mehrere nach außen gekrümmte Stützsegmente, von denen bei dem dargestellten Beispiel wiederum jeweils drei Stützsegmente vorgesehen sind, die die Bezugszeichen 5,6 und 7 tragen.

Die Stützsegmente 5,6 und 7 sind in allen Stützsegmentgruppen 2,3 und 4 zur Anpassung an verschiedene Schlauchfoliendurchmesser gleichzeitig und gleichsinnig verstellbar und hierzu in einem als Ganzes mit 8 bezeichneten Trägerrahmen schwenkbar abgestützt. Der Trägerrahmen 8 besteht aus einem oberen Rahmenteil 9 und einem unteren Rahmenteil 10, die sich quer zur Abziehrichtung 1 erstrecken und durch (nicht dargestellte) in Abziehrichtung 1 verlaufende Streben miteinander zu einer den Trägerrahmen 8 bildenden Einheit miteinander verbunden sind. Die beiden Rahmenteile 9 und 10 besitzen jeweils die Gestalt eines an die Kreisform angenäherten Vielecks und sind aus einzelnen Rohrteilen mit Kastenprofil zusammengefügt.

Entsprechend der Anzahl der Stützsegmente 5,6 und 7 in jeder Segmentgruppe 2,3 und 4 sind drei Stabeinheiten 11,12 und 13 vorgesehen, die sich in Abziehrichtung 1 erstrecken und sämtlichen Segmentgruppen 2,3 und 4 gemeinsam sind. Jede Stabeinheit 11,12 und 13 umfaßt einen Drehstab 14 und einen Haltestab 15. Die Stabeinheiten 11,12 und 13 sind untereinander identisch ausgebildet, so daß ihr Aufbau im einzelnen unter Bezugnahme nur auf die Stabeinheit 11 im folgenden näher erläutert wird.

Der Drehstab 14 ist sowohl im oberen als auch im unteren Rahmenteil 9 bzw. 10 des Trägerrahmens 8 mittels je eines Lagers 16 verschwenkbar abgestützt. Die Lager 16 sind an der Unterseite des oberen Rahmenteils 9 bzw. der Oberseite des unteren Rahmenteils 10 befestigt, wie dies insbesondere aus Fig. 2 ersichtlich ist. Dabei ist der Drehstab 14 an seinen beiden Enden mit je einem im Lager 16 abgestützten Lagerzapfen versehen, von denen der untere, mit 17 bezeichnete, so weit verlängert ist, daß er aus dem unteren Rahmenteil 10 austritt und hier mit einem Antriebsrad bzw. einer Antriebsscheibe 18 als Antriebsglied für einen Eingriff mit einem umlaufenden Antriebsorgan 19, wie einer Kette oder einem Seil, versehen ist. Das umlaufende Antriebsorgan 19 wird über an der Unterseite des Rahmenteils 10 angebrachte Umlenkrollen 20 zwischen den jeweiligen Antriebsgliedern 18 der einzelnen Stabeinheiten 11,12 und 13 geführt und wird beispielsweise mittels eines Elektromotors für einen Umlauf im oder entgegen dem Uhrzeigersinn in Gang gesetzt, mit dem es in nicht näher dargestellter Weise in Antriebsverbindung steht.

Während der Drehstab 14 einschließlich seiner Lagerzapfen aus Rundmaterial besteht, ist der Haltestab 15 von einer ein Rechteckprofil aufweisenden Schiene gebildet, an deren unterem Ende ein Lager 21 angebracht ist, indem der Außenring des Lagers 21 mit dem Haltestab 15 verschweißt ist. Der Lagerzapfen 17 des Drehstabs 14 durchgreift das Lager 21, und der Haltestab 15 ist auf diese Weise schwenkbar am Drehstab 14 abgestützt.

Vom Drehstab 14 geht ein fest mit diesem verbundener, nach außen weisender Ausleger 22 aus, an dessen freies äußeres Ende ein Gelenkstab 23 bei 24 angelenkt ist, der eine zum Schlauchfolienumfang weisende Grundausrichtung besitzt. An das der Schlauchfolie zugewandte Ende des Gelenkstabs 23 ist bei 25 mittels einer Anschlußlasche 26 eine Verbindungsstrebe 27 angelenkt, die, wie die jeweilige Stabeinheit 11,12,13, sämtlichen Segmentgruppen 2,3 und 4 gemeinsam ist.

Der Ausleger 22 und der Gelenkstab 23 unter Einbeziehung des Quermaßes der Verbindungsstrebe 27 besitzen bei dem dargestellten Beispiel in etwa die gleiche Länge quer zur Abziehrichtung 1 der Schlauchfolie und sind jeweils etwa in einer mittleren Querebene der zugehörigen Stabeinheit 11,12,13 angeordnet. Diese Anordnung gewährleistet günstige Angriffspunkte zur Durchführung der Verstellbewegungen bei guter Übersichtlichkeit und geringer Raumbeanspruchung.

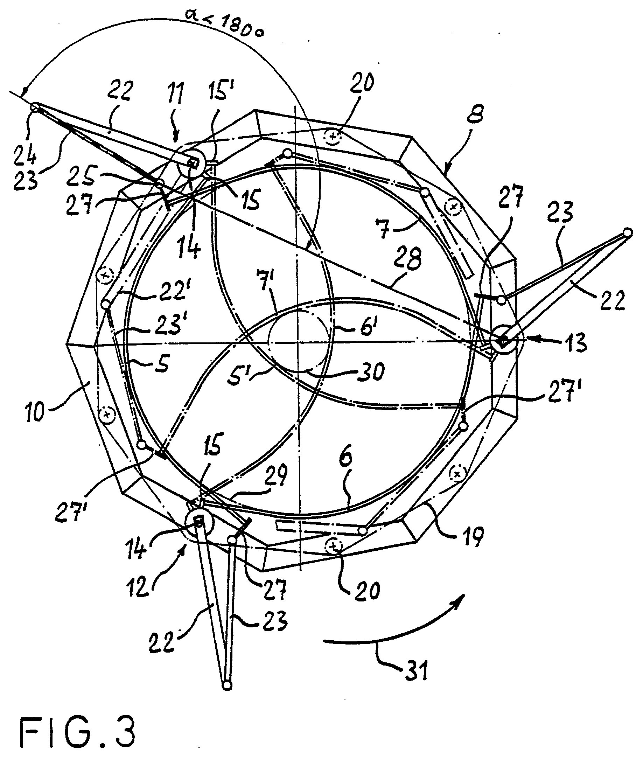

Die geometrische Wirklinie 28 der Stützsegmente 5,6,7 zwischen der Schwenkachse des Drehstabs 14 der zugehörigen Stabeinheit 11,12,13 und der Gelenkachse 25 der Verbindungsstrebe 27 am Gelenkstab 23 der jeweils in Pfeilrichtung 31 benachbarten Stabeinheit schließt mit lezterem in einer Stellung der Stabeinheiten 11,12,13, die dem abstützbaren maximalen Schlauchfoliendurchmesser entspricht (vgl. Fig. 3) einen Winkel $\alpha < 180°$ ein, der bei dem dargestellten Ausführungsbeispiel mit drei in gleichmäßigem Winkelabstand entlang dem Umfang der Schlauchfolie verteilten Stabeinheiten 11,12 und 13 etwa 165° bis 175° beträgt.

Die Stützsegmente 5,6 und 7 sind untereinander identisch ausgebildet und weisen die Form von Kreisbogen mit geraden Endteilen auf, wobei ihr Krümmungsradius dem abstützbaren maximalen Schlauchfoliendurchmesser entspricht. In Fig. 3 ist die Umfangslinie der Schlauchfolie mit maximal abstützbarem Durchmesser i 29 strichpunktiert veranschaulicht, während die Umfangslinie einer Schlauchfolie mit dem annähernd kleinsten abstützbaren Durchmesser mit 30 bezeichnet ist.

Die Abstützung der Stützsegmente 5,6 und 7 jeder Segmentgruppe 2,3 und 4 ist so vorgenommen, daß ein gegebenes Stützsegment, z.B. das Stützsegment 5, im Haltestab 15 der zugehörigen Stabeinheit, bei dem angenommenen Beispiel der Stabeinheit 11, mit einem Ende abgestützt ist, während das andere Ende des Stützsegments 5 in der Verbindungsstrebe 27 der in Pfeilrichtung 31 benachbarten Stabeinheit, d.h. der Stabeinheit 12, abgestützt ist. Die Abstützung der Stützsegmente 5,6 und 7 kann jeweils durch Verschraubungen ihrer geraden Endteile mit dem Haltestab 15 bzw. der Verbindungsstrebe 27 gebildet sein.

In Fig. 3 sind die Stabeinheiten 11,12 und 13 mit ihren Gruppen 2,3 und 4 von Stützsegmenten 5,6 und 7 in der Stellung veranschaulicht, die dem maximal abstützbaren Schlauchfolienumfang 29 entspricht. Ersichtlich wird dabei der Schlauchfolienumfang 29 nahezu vollständig von den Stützsegmenten 5,6 und 7 umschlossen, so daß die Schlauchfolie eine entsprechende Kalibrierung und Stabilisierung ihrer Kreisform erfährt. Die Stützsegmente 5,6 und 7 liegen dabei in an sich bekannter Weise in eng aneinandergrenzenden Horizontalebenen bzw. senkrecht zur Abziehrichtung 1 der Schlauchfolie verlaufenden Querebenen, um unter gegenseitiger Überlappung in den Endbereichen die dargestellte Ringform in Draufsicht zu bilden. Durch Betätigung des Antriebsorgans 19 zur Ausführung einer Umlaufbewegung in Richtung des Pfeils 31 erfolgt eine gleichzeitige und gleichsinnige Verdrehung der Drehstäbe 14 in sämtlichen Stabeinheiten 11,12 und 13, die zu einer entsprechenden Streckung des Auslegers 22 und des Gelenkstabs 23 in den Stabeinheiten 11,12 und 13 führt, mit der Folge, daß eine mehr oder weniger große Einwärtsbewegung des Auslegers 22 mit vorauslaufendem Gelenkstab 23 zur Vorrichtungsmitte hin bis zur Anlage der Stützsegmente 5,6 und 7 an den entsprechend kleineren Schlauchfolienumfang stattfindet. Damit einher geht eine allmählich zunehmende Abweichung der von den Stützsegmenten 5,6,7 jeweils eingeschlossenen Fläche von der Kreisform bis zu der dreieckförmigen Grundgestalt, die bei dem dargestellten Beispiel bei der Abstützung der Schlauchfolie kleinsten Durchmessers gegeben ist. Dabei liegt jede Dreieckseite des von den Stützsegmenten 5,6 und 7 gemeinsam gebildeten Dreiecks am Schlauchfolienumfang 30 mit dazwischenliegenden, mehr oder weniger großen unabgestützten Bereichen an. Auch diese eingeschränkte Abstützung kann jedoch noch in vielen Anwendungsfällen insbesondere bei Schlauchfolien mit kleinen Durchmessern, bei denen die genaue Kreisform und Durchmesserhaltigkeit der Schlauchfolie keine besondere Rolle spielt, ausreichend sein. Jedenfalls besitzt die dargestellte Vorrichtung insoweit umfassende Einsatzmöglichkeiten mit einem weitreichenden Verstellbereich, der bei dem dargestellten Beispiel mit drei Stützsegmenten in jeder Segmentgruppe einen Bereich von etwa 1 : 5 bis 1 : 6 abdeckt. Zur Verdeutlichung des Verstellvorgangs ist in Fig. 3 neben der in vollen Linien eingezeichneten Maximalstellung strichpunktiert die Stellung 5',6',7' der Stützsegmente bei der Abstützung des kleinsten Schlauchfolienumfangs 30 dargestellt.

## Patentansprüche

1. Vorrichtung zum außenseitigen Abstützen von Schlauchfolien aus thermoplastischem Kunststoff, bestehend aus in Abziehrichtung der Schlauchfolie hintereinander angeordneten Gruppen von nach außen gekrümmten, auf verschiedene Schlauchfoliendurchmesser gleichzeitig und gleichsinnig einstellbaren Stützsegmenten, die für ihre Einstellbewegung jeweils mit einem schwenkbar in einem Trägerrahmen gelagerten, allen Stützsegmentgruppen gemeinsamen Drehstab und einem parallel zu diesem ausgerichteten, seinerseits allen Stützsegmentgruppen gemeinsamen Haltestab verbunden sind, dadurch gekennzeichnet, daß die Drehstäbe (14) und die Haltestäbe (15) jeweils zu einer Stabeinheit (11,12,13) zusammengefaßt sind, bei der der Haltestab (15) schwenkbar am Drehstab (14) abgestützt ist und ein Ende eines Stützsegments (5,6,7) in jeder Stützsegmentgruppe (2,3,4) aufnimmt, dessen anderes Ende in einer wiederum allen Stützsegmentgruppen (2,3,4) gemeinsamen Verbindungsstrebe (27) einer benachbarten Stabeinheit (11,12,13) abgestützt ist.

2. Vorrichtung nach Anspruch 1, dadurch gekennzeichnet, daß die Verbindungsstrebe (27) schwenkbar mit einem von der jeweiligen Stabeinheit (11,12,13) ausgehenden, nach außen weisenden Ausleger (22) verbunden ist.

3. Vorrichtung nach Anspruch 2, dadurch gekennzeichnet, daß die Schwenkverbindung der Verbindungsstrebe (27) mit dem Ausleger (22) von einem zwischengeschalteten Gelenkstab (23) gebildet ist.

4. Vorrichtung nach Anspruch 3, dadurch gekennzeichnet, daß der Gelenkstab (23) an das freie äußere Ende des Auslegers (22) angelenkt ist und eine zum Schlauchfolienumfang weisende Grundausrichtung aufweist.

5. Vorrichtung nach Anspruch 3 oder 4, dadurch gekennzeichnet, daß der Ausleger (22) und der Gelenkstab (23) jeweils in etwa die gleiche Länge quer zur Abziehrichtung (1) der Schlauchfolie aufweisen.

6. Vorrichtung nach einem der Ansprüche 3 bis 5, dadurch gekennzeichnet, daß die Ausleger (22) und die Gelenkstäbe (23) jeweils etwa in einer mittleren Querebene der zugehörigen Stabeinheit (11,12,13) angebracht sind.

7. Vorrichtung nach einem der Ansprüche 3 bis 6, dadurch gekennzeichnet, daß die geometrische Wirklinie (28) jedes Stützsegments (5,6,7) zwischen der Schwenkachse des Drehstabs (14) der zugehörigen Stabeinheit (z.B. 13) und der Gelenkachse (25) der Verbindungsstrebe (27) am Gelenkstab (23) der benachbarten Stabeinheit (z.B. 11) mit letzterem in dessen dem abstützbaren maximalen Schlauchfoliendurchmesser entsprechender Stellung einen Winkel α < 180° einschließt.

8. Vorrichtung nach Anspruch 7, dadurch gekennzeichnet, daß bei drei in gleichmäßigem Winkelabstand entlang dem Umfang der Schlauchfolie verteilten Stabeinheiten (11,12,13) mit dementsprechend jeweils drei Stützsegmenten (5,6,7) in jeder Stützsegmentgruppe (2,3,4) der Winkel α etwa 165° bis 175° beträgt.

9. Vorrichtung nach einem der Ansprüche 1 bis 8, dadurch gekennzeichnet, daß die Stützsegmente (5,6,7) die Form von Kreisbogen mit geraden Endteilen aufweisen, deren Radius dem abstützbaren maximalen Schlauchfoliendurchmesser entspricht.

10. Vorrichtung nach einem der Ansprüche 1 bis 9, dadurch gekennzeichnet, daß die Drehstäbe (14) der Stabeinheiten endseitige Lagerzapfen aufweisen, von denen einer (17) mit einem Antriebsglied (18) für einen Eingriff mit einem umlaufenden Antriebsorgan (19) zur gemeinsamen Verschwenkung sämtlicher Drehstäbe (14) um gleiche Winkelbeträge versehen ist.

## Revendications

1. Dispositif pour soutenir extérieurement des feuilles tubulaires en matière thermoplastique, constitué de groupes, disposés en succession dans le sens de tirage de la feuille tubulaire, de segments de soutien courbés vers l'extérieur pouvant être réglés simultanément et dans le même sens sur divers diamètres de feuilles tubulaires, qui sont chacun reliés, en vue de leur mouvement de réglage, à une barre de rotation montée à pivot dans un cadre de support et commune à tous les groupes de segments de support et à une barre de retenue parallèle à la barre de rotation et commune à tous les groupes de segments de soutien, caractérisé en ce que la barre de rotation (14) et la barre de retenue (15) sont chaque fois rassemblées en une unité de barres (11, 12, 13) dans laquelle la barre de retenue (15) est supportée à pivot par la barre de rotation (14) et reçoit une extrémité d'un segment de soutien (5, 6, 7) de chaque groupe de segments de soutien (2, 3, 4) dont l'autre extrémité est soutenue par une entretoise de liaison (27) d'une unité de barres (11, 12, 13) voisine à nouveau commune à tous les groupes de segments de soutien (2, 3, 4).

2. Dispositif suivant la revendication 1, caractérisé en ce que l'entretoise de liaison (27) est articulée à un bras (22) s'étendant vers l'extérieur à partir de l'unité de barres (11, 12, 13) en question.

3. Dispositif suivant la revendication 2, caractérisé en ce que l'articulation de l'entretoise de liaison (27) au bras (22) est constituée d'une biellette (23) intermédiaire.

4. Dispositif suivant la revendication 3, caractérisé en ce que la biellette (23) est articulée à l'extrémité externe libre du bras (22) et présente une orientation de base pointant vers le contour de la feuille tubulaire.

5. Dispositif suivant la revendication 3 ou 4, caractérisé en ce que le bras (22) et la biellette (23) ont chacun à peu près la même longueur perpendiculairement au sens de tirage (1) de la feuille tubulaire.

6. Dispositif suivant l'une quelconque des revendications 3 à 5, caractérisé en ce que le bras (22) et la biellette (23) sont chaque fois prévus à peu près dans un plan transversal médian de l'unité de barres (11, 12, 13) associée.

7. Dispositif suivant l'une quelconque des revendications 3 à 6, caractérisé en ce que la ligne d'action géométrique (28) de chaque segment de soutien (5, 6, 7) entre l'axe de pivotement de la barre de rotation (14) de l'unité de barres associée (par exemple 13) et l'axe d'articulation (25) de l'entretoise de liaison (27) à la biellette (23) de l'unité de barres voisine (par exemple 11) forme avec celle-ci, dans sa position correspondant au diamètre maximum de feuille tubulaire pouvant être soutenu, un angle α < 180°.

8. Dispositif suivant la revendication 7, caractérisé en ce que, pour trois unités de barres (11, 12, 13) réparties sur le pourtour de la feuille tubulaire à des distances angulaires uniformes, et de manière correspondante, pour chaque fois trois segments de soutien (5, 6, 7) dans chaque groupe de segments de soutien (2, 3, 4) l'angle a est d'environ 165 à 175°.

9. Dispositif suivant l'une quelconque des revendications 1 à 8, caractérisé en ce que les segments de soutien (5, 6, 7) ont la forme d'arc de cercle avec des parties d'extrémité rectilignes dont le rayon correspond au diamètre maximum de feuille tubulaire pouvant être soutenu.

10. Dispositif suivant l'une quelconque des revendications 1 à 9, caractérisé en ce que les barres de rotation (14) des unités de barres présentent des tourillons d'extrémité dont l'un (17) est pourvu d'un organe d'entraînement (18) destiné à venir en prise avec un organe de transmission d'entraînement (19) en vue d'un pivotement commun d'angles égaux de toutes les barres de rotation (14).

## Claims

1. Device for outside support of tubular films made of thermoplastic plastic, consisting of groups, arranged behind one another in the take-off direction of the tubular film, of support segments curved outwards, adjustable at the same time and in the same direction to different tubular film diameters, which for their adjustment movement are connected in each case to a rotary bar swivel- and bearing-mounted in a carrier frame which bar is common to all support segment groups and a holding bar aligned in parallel thereto, common for its part to all support segment groups, characterized in that the rotary bars (14) and the holding bars (15) are united in each case to form one bar unit (11, 12, 13) in which the holding bar (15) is supported with swivel movement against the rotary bar (14) and takes up one end of a support segment (5, 6, 7) in each support segment group (2, 3, 4) whose other end is supported in a connecting strut (27) common in turn to all support segment groups (2, 3, 4) of a neighbouring bar unit (11, 12, 13).

2. Device according to claim 1, characterized in that the connecting strut (27) is connected with a swivel movement to a jib (22) pointing outwards and going out from the bar unit concerned (11, 12, 13).

3. Device according to claim 2, characterized in that the swivel connection of the connecting strut (27) with the jib (22) is formed by an inserted articulated bar (23).

4. Device according to claim 3, characterized in that the articulated bar (23) is coupled to the free outer end of the jib (22) and reveals a basic alignment pointing to the tubular film periphery.

5. Device according to claim 3 or 4, characterized in that the jib (22) and the articulated bar (23) exhibit more or less the same length transverse to the draw-off direction (1) of the tubular film.

6. Device according to one of claims 3 to 5, characterized in that the jibs (22) and the articulated bars (23) are in each case fitted approximately in a mean transverse plane to the relevant bar unit (11, 12, 13).

7. Device according to one of claims 3 to 6, characterized in that the geometric line of action (28) of each support segment (5, 6, 7) between the swivel axis of the rotary bar (14) of the relevant bar unit (e.g. 13) and the articulated axis (25) of the connecting strut (27) at the articulated bar (23) of the neighbouring bar unit (e.g. 11) encloses with the latter in its position corresponding to the supportable maximum tubular film diameter an angle $\alpha < 180°$.

8. Device according to claim 7, characterized in that in the case of three bar units (11, 12, 13) distributed at a uniform angular interval along the periphery of the tubular film with three support segments (5, 6, 7) accordingly in each case in each support segment group (2, 3, 4) the angle $\alpha$ amounts to about 165° to 175°.

9. Device according to one of claims 1 to 8, characterized in that the support segments (5, 6, 7) reveal the form of circular arcs with straight end parts, whose radius corresponds to the supportable maximum tubular film diameter.

10. Device according to one of claims 1 to 9, characterized in that the rotary bars (14) of the bar units reveal end journals of which one (17) is provided with a drive member (18) for engaging with a rotating drive unit (19) for common swivelling of all the rotary bars (14) by the same angular amounts.

FIG.1

FIG.2

FIG.3